# EUROPEAN PATENT APPLICATION

(11) **EP 1 498 977 A1**
(43) Date of publication of application: **19.01.2005**
(21) Application number: 03746451.8
(22) Date of filing: 10.04.2003
(51) Int. Cl.: H01M 10/28, H01M 10/24, H01M 10/34, H01M 4/70, H01M 4/74

(54) **ALKALINE STORAGE BATTERY**

(30) Priority: 17.04.2002 JP 2002114997
(71) Applicant: MATSUSHITA ELECTRIC INDUSTRIAL CO., LTD., Kadoma-shi, Osaka 571-8501 (JP)
(72) Inventor: IZUMI, Yoichi, Habikino-shi, Osaka 583-0865 (JP); KAKINUMA, Akira, Osaka-shi, Osaka 534-0022 (JP); KOSHIBA, Nobuharu, Heguricho, Ikoma-gun, Nara 636-0941 (JP)
(86) International application number: PCT/JP2003/004592
(87) International publication number: WO 2003/088403

(57) **Abstract**

An alkaline storage battery includes: [a] a shallow case having an opening and a bottom; [b] a sealing plate covering the opening of the case; [c] a first electrode adjacent to an inner face of the bottom of the case; [d] a second electrode adjacent to an inner face of the sealing plate; (e) a separator interposed between the first electrode and the second electrode; [f] an alkaline electrolyte; and [g] at least one current collector plate selected from the group consisting of (g1) a conductive current collector plate joined to the inner face of the bottom of the case and forming a gas transfer path distributed two-dimensionally between the inner face of the bottom of the case and the first electrode and (g2) a conductive current collector plate joined to the inner face of the sealing plate and forming a gas transfer path distributed two-dimensionally between the inner face of the sealing plate and the second electrode.

## Description

### Technical Field

The present invention relates to alkaline storage batteries, such as nickel metal-hydride storage batteries, nickel zinc storage batteries, and nickel cadmium storage batteries, and particularly, to flat-type alkaline storage batteries such as a button-type or a coin-type.

### Background Art

An alkaline storage battery having a flat shape, such as a button shape or a coin shape, consists of: a shallow case with an opening and a bottom; a sealing plate closing the opening of the case; an insulating gasket interposed between the case and the sealing plate; a positive electrode and a negative electrode accommodated in the case; a separator interposed between the positive and negative electrodes; and an alkaline electrolyte. The positive and negative electrodes and the separator, which are porous, retain the electrolyte containing potassium hydroxide and the like. Accordingly, smooth electrochemical reactions become possible.

The positive electrode comprises a core material into which nickel hydroxide is filled, and the positive electrode core material is made of porous sintered nickel, foam metal, or the like. The negative electrode comprises a core material to which cadmium, zinc, a hydrogen storage alloy, or the like is applied or into which it is filled, and the negative electrode core material is made of punched metal, foam metal, or the like.

In alkaline storage batteries, at the final stage of charging and upon overcharge, oxygen gas is electrochemically produced from the positive electrode, and the oxygen gas is reduced by the negative electrode and returns to water. In nickel metal-hydride storage batteries, at the final stage of charging and upon overcharge, hydrogen is also produced from the negative electrode, and the hydrogen gas is chemically absorbed by the negative electrode. If these gases are not promptly consumed, the internal pressure of the batteries rises, resulting in battery expansion. Battery thickness tends to increase particularly in alkaline storage batteries having a flat shape, such as a button shape or a coin shape.

The produced oxygen gas stays near the inner bottom face of the case adjacent to the positive electrode or the inner face of the sealing plate and moves the electrolyte, causing a localized distribution of the electrolyte. As a result, smooth electrochemical reactions are hindered, leading to impaired charging efficiency. In cases where the localized distribution of the electrolyte persists even after charging has finished, it becomes difficult to obtain a predetermined discharge capacity, even if discharging is started relatively shortly after the completion of charging.

As described above, the speed of gas consumption in alkaline storage batteries greatly affects battery dimensions and electrochemical characteristics.

Therefore, maximizing the speed of gas consumption becomes important. Proposals to facilitate prompt gas consumption include the followings.

Japanese Unexamined Patent Publication No. 2000-507386 proposes providing a groove on at least one face of a core material of a bipolar electrode.

Japanese Laid-Open Patent Publication No. 2001-250579 proposes providing a depression on the face of a negative electrode adjacent to the inner face of a sealing plate, and providing a core material portion that carries no active material in a positive electrode at the part adjacent to the inner bottom face of a battery case.

In alkaline storage batteries having a flat shape, such as a button shape or a coin shape, it is essential to lower the contact resistance between the electrode and the inner bottom face of the case or the inner face of the sealing plate. Such batteries tend to have contact resistance greater than that of cylindrical batteries including a wound electrode plate group, because of the low pressure by which the electrodes are pressed against the case or the sealing plate. This problem is particularly serious for the positive electrode that uses nickel hydroxide having poor conductivity or the like as the active material.

The contact resistance can be reduced by connecting the electrode core material with the case or the sealing plate via a current-collecting lead. In this case, however, battery structure becomes complicated, thereby increasing costs. Also, when a gasket is fitted, the positive and negative electrodes must be positioned correctly such that they are accommodated inside the gasket. However, the existence of the current-collecting lead makes the positioning of the electrodes difficult, thereby increasing the incidence of defects and decreasing production speed in mass production.

As proposed in Japanese Laid-Open Patent Publication No. 2001-250579, when a core material portion carrying no active material is provided in the positive electrode at the part adjacent to the inner bottom face of the battery case, the contact resistance between the positive electrode and the battery case can be reduced to a relatively low level, but it is not low enough. Further, to obtain such a positive electrode, the active material needs to be filled from one side of the core material such that the active material does not reach the other side. Thus, the fill quantity of the active material varies easily, so that great effort is necessary for controlling it.

### Disclosure of Invention

It is therefore an object of the present invention to suppress dimensional changes caused by the increase in battery internal pressure at the final stage of charging and upon overcharge, and the degradation in electrochemical characteristics due to uneven electrolyte distribution. It is another object of the present invention to reduce the contact resistance between the electrode and the case or the sealing plate. It is still another object of the present invention to provide an alkaline storage battery having excellent electrochemical characteristics and small internal resistance at low costs.

That is, the present invention relates to an alkaline storage battery including: [a] a shallow case having an opening and a bottom; [b] a sealing plate covering the opening of the case; [c] a first electrode adjacent to an inner face of the bottom of the case; [d] a second electrode adjacent to an inner face of the sealing plate; [e] a separator interposed between the first electrode and the second electrode; [f] an alkaline electrolyte; and [g] at least one current collector plate selected from the group consisting of (g1) a conductive current collector plate joined to the inner face of the bottom of the case and forming a gas transfer path distributed two-dimensionally between the inner face of the bottom of the case and the first electrode and (g2) a conductive current collector plate joined to the inner face of the sealing plate and forming a gas transfer path distributed two-dimensionally between the inner face of the sealing plate and the second electrode.

The present invention also pertains to an alkaline storage battery including: [a] a shallow case having an opening and a bottom; [b] a sealing plate covering the opening of the case; [c] a first electrode adjacent to an inner face of the bottom of the case; [d] a second electrode adjacent to an inner face of the sealing plate; [e] a separator interposed between the first electrode and the second electrode; [f] an alkaline electrolyte; and (g1) at least one spacer joined to the inner face of the bottom of the case and having at least one protrusion that forms a gas transfer path distributed two-dimensionally between the inner face of the bottom of the case and the first electrode, and/or (g2) at least one spacer joined to the inner face of the sealing plate and having at least one protrusion that forms a gas transfer path distributed two-dimensionally between the inner face of the sealing plate and the second electrode.

The present invention is also directed to an alkaline storage battery including: [a] a shallow case having an opening and a bottom; [b] a sealing plate covering the opening of the case; [c] a first electrode adjacent to an inner face of the bottom of the case; [d] a second electrode adjacent to an inner face of the sealing plate; [e] a separator interposed between the first electrode and the second electrode; [f] an alkaline electrolyte; and [g] at least one current collector plate selected from the group consisting of (g1) a conductive current collector plate joined to the inner face of the bottom of the case and forming a gap between the inner face of the bottom of the case and the first electrode and (g2) a conductive current collector plate joined to the inner face of the sealing plate and forming a gap between the inner face of the sealing plate and the second electrode.

The gap between the inner face of the bottom of the case and the first electrode or the gap between the inner face of the sealing plate and the second electrode may be filled with the electrolyte, but the gap must be a space in which no battery components other than the electrolyte exist.

One of the first electrode and the second electrode is preferably a negative electrode having a core material comprising punched metal.

The present invention is particularly effective when one of the first electrode and the second electrode is a negative electrode comprising a hydrogen storage alloy or zinc.

The present invention includes, for example, the following modes:
(i) An alkaline storage battery including: [a] a shallow case having an opening and a bottom; [b] a sealing plate covering the opening of the case; [c] a positive electrode adjacent to the inner face of the bottom of the case; [d] a negative electrode adjacent to the inner face of the sealing plate; [e] a separator interposed between the positive electrode and the negative electrode; [f] an alkaline electrolyte; and [g] at least one positive electrode current collector plate joined to the inner face of the bottom of the case and forming a gas transfer path distributed two-dimensionally between the inner face of the bottom of the case and the positive electrode;
(ii) An alkaline storage battery including: [a] a shallow case having an opening and a bottom; [b] a sealing plate covering the opening of the case; [c] a positive electrode adjacent to the inner face of the bottom of the case; [d] a negative electrode adjacent to the inner face of the sealing plate; [e] a separator interposed between the positive electrode and the negative electrode; [f] an alkaline electrolyte; and [g] at least one negative electrode current collector plate joined to the inner face of the sealing plate and forming a gas transfer path distributed two-dimensionally between the inner face of the sealing plate and the negative electrode;
(iii) An alkaline storage battery including: [a] a shallow case having an opening and a bottom; [b] a sealing plate covering the opening of the case; [c] a negative electrode adjacent to the inner face of the bottom of the case; [d] a positive electrode adjacent to the inner face of the sealing plate; [e] a separator interposed between the positive electrode and the negative electrode; [f] an alkaline electrolyte; and [g] at least one negative electrode current collector plate joined to the inner face of the bottom of the case and forming a gas transfer path distributed two-dimensionally between the inner face of the bottom of the case and the negative electrode;
(iv) An alkaline storage battery including: [a] a shallow case having an opening and a bottom; [b] a sealing plate covering the opening of the case; [c] a negative electrode adjacent to the inner face of the bottom of the case; [d] a positive electrode adjacent to the inner face of the sealing plate; [e] a separator interposed between the positive electrode and the negative electrode; [f] an alkaline electrolyte; and (g2) at least one positive electrode current collector plate joined to the inner face of the sealing plate and forming a gas transfer path distributed two-dimensionally between the inner face of the sealing plate and the positive electrode;
(v) An alkaline storage battery including: [a] a shallow case having an opening and a bottom; [b] a sealing plate covering the opening of the case; [c] a positive electrode adjacent to the inner face of the bottom of the case; [d] a negative electrode adjacent to the inner face of the sealing plate; [e] a separator interposed between the positive electrode and the negative electrode; [f] an alkaline electrolyte; (g1) at least one positive electrode current collector plate joined to the inner face of the bottom of the case and forming a gas transfer path distributed two-dimensionally between the inner face of the bottom of the case and the positive electrode; and (g2) at least one negative electrode current collector plate joined to the inner face of the sealing plate and forming a gas transfer path distributed two-dimensionally between the inner face of the sealing plate and the negative electrode;
(vi) An alkaline storage battery including: [a] a shallow case having an opening and a bottom; [b] a sealing plate covering the opening of the case; [c] a negative electrode adjacent to the inner face of the bottom of the case; [d] a positive electrode adjacent to the inner face of the sealing plate; [e] a separator interposed between the positive electrode and the negative electrode; [f] an alkaline electrolyte; (g1) at least one negative electrode current collector plate joined to the inner face of the bottom of the case and forming a gas transfer path distributed two-dimensionally between the inner face of the bottom of the case and the negative electrode; and (g2) at least one positive electrode current collector plate joined to the inner face of the sealing plate and forming a gas transfer path distributed two-dimensionally between the inner face of the sealing plate and the positive electrode.

### Brief Description of Drawings

Fig. 1 is a longitudinal sectional view of a coin-shaped sealed battery that is an example of an alkaline storage battery of the present invention.
Fig. 2 is an oblique view of an example of a current collector plate used in an alkaline storage battery of the present invention.
Fig. 3 is an oblique view of another example of a current collector plate used in an alkaline storage battery of the present invention.
Fig. 4 is an oblique view of still another example of a current collector plate used in an alkaline storage battery of the present invention.
Fig. 5 is an enlarged photograph of the top face of an example of a current collector plate used in an alkaline storage battery of the present invention.
Fig. 6 is an enlarged photograph of a section of the conductive current collector plate of Fig. 5.

### Best Mode for Carrying Out the Invention

An alkaline storage battery in accordance with the present invention includes: [a] a shallow case having an opening and a bottom; [b] a sealing plate covering the opening of the case; [c] a first electrode adjacent to the inner face of the bottom of the case; [d] a second electrode adjacent to the inner face of the sealing plate; [e] a separator interposed between the first electrode and the second electrode; and [f] an alkaline electrolyte.

The shallow case having an opening and a bottom refers to a case having an opening and a bottom used in batteries having a flat shape, such as a button shape or a coin shape. The diameter of the opening of the case is usually 1.4 to 70 times the thickness (height) of the case. By "the diameter of the opening" is meant the diameter of a circular opening, the shorter axis of an elliptical or substantially elliptical opening, and the shorter side of a rectangular opening.

The alkaline storage battery in accordance with the present invention further includes (g1) a conductive current collector plate joined to the inner face of the bottom of the case and forming a gas transfer path distributed two-dimensionally between the inner face of the bottom of the case and the first electrode and/or (g2) a conductive current collector plate joined to the inner face of the sealing plate and forming a gas transfer path distributed two-dimensionally between the inner face of the sealing plate and the second electrode.

In this battery, there is a space in which no battery components other than the electrolyte exist between the electrode and the inner face of the bottom of the case and/or between the electrode and the inner face of the sealing plate. Therefore, since gas produced from the electrode can move speedily, oxygen gas produced from the positive electrode at the final stage of charging and upon overcharge passes through the periphery of the positive electrode and reaches the negative electrode, where it is reduced and returns to water. This makes it possible to prevent the battery internal pressure from becoming abnormally high. This also makes it possible to prevent the localized distribution of the electrolyte caused by stagnant oxygen gas or hydrogen gas between the inner face of the bottom of the case and the electrode and/or between the inner face of the sealing plate and the electrode.

To make full use of such advantages, it is preferred to use a plate-shaped electrode that can be arranged in parallel with the inner face of the bottom of the case or the inner face of the sealing plate.

The gas transfer path is preferably distributed in an area of 50 to 100 % of the whole inner face of the bottom of the case or the whole inner face of the sealing plate.

Examples of the conductive current collector plate that can be used include a current collector plate that comprises a conductive porous material having pores that communicate with one another (hereinafter referred to as current collector plate A) and a conductive sheet having a plurality of protrusions (hereinafter referred to as current collector plate B). Examples of the conductive porous material having pores that communicate with one another include a foam nickel sheet and expanded metal. The conductive sheet having a plurality of protrusions may have a plurality of pores. The conductive sheet having a plurality of protrusions may be a net having a plurality of protrusions.

Metals such as nickel, stainless, iron, and copper can be used as the material of the current collector plate, as well as carbon. Also, nickel-plated iron and the like can be used.

Since the current collector plates A and B are in the form of a plate, a sheet or a net, they can be joined to the almost entire inner face of the bottom of the case or the almost entire inner face of the sealing plate. Accordingly, the contact resistance between the electrode and the battery case or between the electrode and the sealing plate can be drastically reduced. Also, the current collector plates A and B have a shape in which they can be positioned over the almost entire inner face of the bottom of the case or the almost entire inner face of the sealing plate. Thus, in mounting an electrode on the current collector plate, the position of the electrode can be determined accurately. Accordingly, in mass production, the incidence of defects does not increase, nor does the speed of production decrease.

Since the current collector plates A and B are not part of the electrode core material, there is no need to provide a core material portion in the positive electrode, as proposed by Japanese Laid-Open Patent Publication No. 2001-250579, that carries no active material at the part adjacent to the inner face of the bottom of the battery case. Therefore, the quantity of the active material filled into the electrode core material does not change significantly, nor is great effort necessary for controlling the fill quantity.

The apparent thickness of the current collector plate B including the protrusions is preferably 100 µm or more. If the apparent thickness of the current collector plate B becomes less than 100 µm, the gas transfer path is reduced accordingly, impairing the effect of suppressing uneven electrolyte distribution.

In order to sufficiently ensure the effect of suppressing uneven electrolyte distribution, it is preferred that the distance between the first electrode and the inner face of the bottom of the case or the distance between the second electrode and the inner face of the sealing plate be 100 µm or more.

The apparent thickness of the current collector plate B including the protrusions is preferably 1/3 or less of the thickness of the adjacent electrode. If the apparent thickness of the current collector plate B exceeds 1/3 of the thickness of the electrode, the energy density of the battery decreases.

It is preferred that the tip ends of the plurality of protrusions of the current collector plate B be buried in the adjacent electrode. This structure enables a further reduction in the contact resistance between the electrode and the battery case or between the electrode and the sealing plate. In order to effectively reduce the contact resistance between the electrode and the battery case or between the electrode and the sealing plate, it is preferred that the tip ends of the protrusions of the current collector plate B buried in the electrode have a length that is 10% or more of the apparent thickness of the current collector plate B including the protrusions. As long as the length of the tip ends buried in the electrode is 10% or more of the apparent thickness, the contact resistance can be reduced to almost the same extent.

A current collector plate that comprises, for example, a metal sheet deformed by punching from one side or both sides and having a plurality of pores and burrs formed around the pores (hereinafter referred to as current collector plate C) can be used as the current collector plate B.

The material thickness of the metal sheet used for the current collector plate C is preferably 10 to 100 µm, and more preferably 20 to 50 µm. When metal sheets are punched from one side or both sides, burrs are simultaneously formed around the resultant pores in the metal sheets. Examples of the metal sheet include metal foil and metal plates.

The apparent thickness of the current collector plate B including the burrs is preferably equal to or more than twice the material thickness of the metal sheet. If the apparent thickness of the current collector plate B is less than twice the material thickness of the metal sheet, it is difficult to provide a sufficient gas transfer path and to bury the burrs sufficiently in the electrode.

There is no limitation with respect to the shape of the pores to be formed in the metal sheet, and circular, triangular or rectangular pores can be formed. Among them, because of the ease of working, circular or rectangular pores are preferable, and circular pores are particularly preferable. There is also no limitation with regard to the size of the pores, but the area of one pore is preferably 0.02 to 3 mm². In the case of circular pores, the pore radius is preferably 0.08 to 1 mm.

In the current collector plate C, it is preferred that pores closest to each other be formed by punching from opposite sides and that burrs formed around the pores protrude in mutually opposing directions. Also, it is preferred that the distance between the centers of the pores closest to each other be 0.3 mm or more and 5 mm or less.

The metal sheet before being deformed by punching may have projections and depressions for example in wavelike or zigzag form. The projections and depressions can be provided by embossing. When a metal sheet having projections and depressions is punched to form a plurality of pores, the apparent thickness of the current collector plate C is the sum of the material thickness of the metal sheet, the thickness increased by the projections and depressions, and the thickness increased by the burrs.

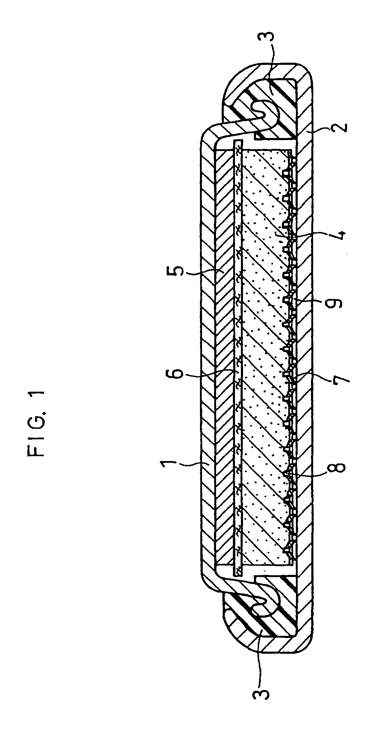

Fig. 1 is a longitudinal sectional view of a coin-shaped alkaline storage battery in accordance with one embodiment of the present invention. This alkaline storage battery includes: a shallow case 2 having an opening and a bottom; a sealing plate 1 covering the opening of the case 2; a positive electrode 4 adjacent to the inner face of the bottom of the case 2; a negative electrode 5 adjacent to the inner face of the sealing plate 1 and comprising a core material of punched metal; a separator 6 interposed between the positive electrode 4 and the negative electrode 5; and an alkaline electrolyte.

A netlike conductive sheet 7 having a plurality of protrusions 8 is joined to the inner face of the bottom of the case 2 as the conductive current collector plate. The tip ends of the protrusions 8 are buried in the adjacent positive electrode 4. The conductive sheet 7 electrically connects the case 2 with the positive electrode 4 and forms a gas transfer path 9 distributed two-dimensionally between the inner face of the bottom of the case 2 and the positive electrode 4. The joining of the conductive sheet 7 and the inner face of the bottom of the case 2 is preferably performed by welding.

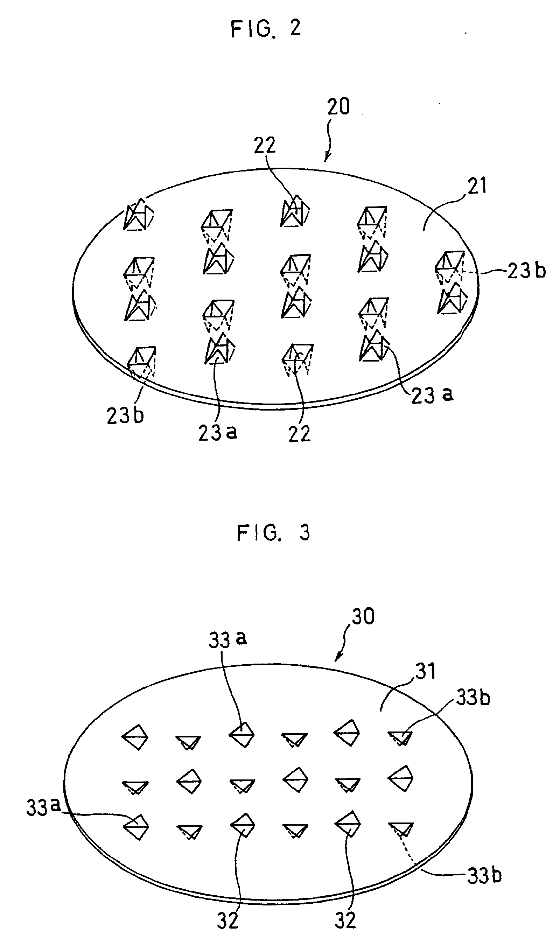

Next, examples of the current collector plate C are illustrated in Figs. 2 to 4.

Fig. 2 is an example of a current collector plate 20 comprising a circular metal sheet. A plurality of rectangular pores 22 are formed in a metal sheet 21 by punching from both sides. Around each of the pores 22 are four pointed burrs 23a or 23b.

Fig. 3 is another example of a current collector plate 30 comprising a circular metal sheet. A plurality of triangular pores 32 are formed in a metal sheet 31 by punching from both sides. Around each of the pores 32 is one pointed burr 33a or 33b.

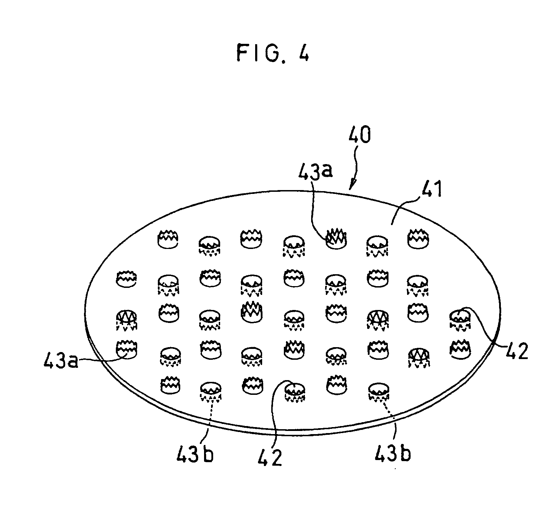

Fig. 4 is still another example of a current collector plate 40 comprising a circular metal sheet. A plurality of circular pores 42 are formed in a metal sheet 41 by punching from both sides. Around each of the pores 42 are a plurality of pointed burrs 43a or 43b.

The tip ends of the burrs 23a, 33a, and 43a protruding in one direction can be buried in an electrode. The burrs 23b, 33b, and 43b protruding in the opposite direction are welded to the inner face of the bottom of the battery case or the inner face of the sealing plate. From the viewpoint of sufficiently ensuring the gas transfer path, it is preferred to form burrs such that the burrs alternately protrude in opposite directions, as shown in Figs. 2 to 4.

The present invention is particularly effective when the negative electrode comprises a hydrogen storage alloy or zinc. The negative electrode comprising a hydrogen storage alloy produces hydrogen gas, while the negative electrode comprising zinc exhibits slow oxygen gas absorption. It is therefore preferred to form a gas transfer path on the negative electrode side as well. The present invention is also effective when the negative electrode comprises cadmium.

The present invention is particularly effective when the negative electrode core material comprises punched metal. The reason is as follows. Since such negative electrodes are generally highly dense, electrolyte exhaustion tends to occur therein. However, if the gas transfer path is adjacent to the negative electrode, uneven electrolyte distribution is corrected, so that electrolyte exhaustion is unlikely to occur. The negative electrode comprising the core material of punched metal is inexpensive and has little variation in quality, and hence, is suited for mass production.

In the following, the present invention is specifically described by way of examples. These examples, however, are not to be construed as limiting in any way the present invention.

### Example 1

### (i) Preparation of positive electrode

Nickel hydroxide containing Co and Zn was used as a positive electrode active material. 100 parts by weight of this active material was mixed with 10 parts by weight of cobalt hydroxide and a proper amount of water. The resultant mixture was filled into the pores of a 1.2 mm thick foam nickel substrate. This was dried, rolled, and cut into a round shape with a diameter of 9.2 mm, to provide a positive electrode. The thickness of the resultant positive electrode was about 0.78 mm. The theoretical capacity of the positive electrode (the capacity obtained when one-electron reaction of all the nickel in the nickel hydroxide occurs) was 30 mAh.

### (ii) Preparation of negative electrode

A hydrogen storage alloy of the known AB₅ type (MmNi_{3.55}Co_{0.75}Al_{0.3}Mn_{0.4}: Mm represents misch metal) was used as a negative electrode material. This alloy was pulverized into a mean grain size of 35 µm and was then treated with an aqueous KOH solution. 100 parts by weight of the treated alloy powder was mixed with 0.7 part by weight of a binder (styrenebutadiene rubber), 0.15 part by weight of carboxymethyl cellulose, and a proper amount of water. The resultant mixture was applied onto a 60 *µ*m thick punched metal substrate (perforated metal plate) plated with nickel. This was dried, rolled, and cut into a round shape with a diameter of 9.2 mm, to provide a negative electrode. The thickness of the resultant negative electrode was about 0.47 mm. The capacity of the negative electrode was made larger than that of the positive electrode, and the battery capacity was determined by the capacity of the positive electrode.

### (iii) Preparation of current collector plate

A 30 *µ*m thick nickel sheet was passed between upper and lower rolls whose surfaces had needle-like, quadrangular-pyramid-shaped protrusions. The needle-like, quadrangular-pyramid-shaped protrusions alternately pierced the nickel sheet in opposite directions, thereby forming rectangular pores and burrs at the same time. The resultant nickel plate having a plurality of pores and burrs formed around the pores was cut into a round shape with a diameter of about 9 mm, to obtain a current collector plate as illustrated in Fig. 2. The apparent thickness of the resultant current collector plate including the burrs was about 350 µm, and the center-to-center distance between the pores closest to each other was 0.7 mm, and the area of one pore was about 0.04 mm².

### (iv) Assembly of battery

A polypropylene non-woven fabric subjected to a hydrophilic treatment was used as a separator, and an aqueous solution dissolving about 7 mol/L potassium hydroxide and about 1 mol/L lithium hydroxide was used as an electrolyte.

The negative electrode was joined to the inner face of a sealing plate, and the separator was mounted on the negative electrode. A gasket was then fitted to the circumference of the sealing plate. The electrolyte was injected into the sealing plate, and the positive electrode was mounted on the separator. Thereafter, a case having an opening and a bottom, whose inner face (a round shape with a diameter of about 12 mm) had been welded to the current collector plate, was mounted so as to cover the positive electrode. The opening edge of the case was crimped onto the gasket fitted to the circumference of the sealing plate, to seal the case. As a result, a coin-shaped nickel metal-hydride storage battery A with a diameter of about 12.5 mm was completed. The height of the battery A was about 2.1 mm.

### (v) Examination and evaluation of battery

### [Examination]

Six batteries A were produced. Of them, three batteries A were cut, and their sectional structures were observed. It was found that the apparent thickness of the current collector plates including the burrs was about 250 µm. However, before the production of the batteries A, the apparent thickness of the current collector plates was about 350 µm. Upon the sealing of the batteries, the current collector plates were pressed by the case and the positive electrode, so that the ends of the burrs were deformed. The tip ends of the burrs of the current collector plates were buried in the positive electrode to a depth of about 50 µm. It was observed that there was a gap in which the core material, the active material and the like did not exist between the positive electrode and the case.

### [Evaluation]

The remaining three batteries A were evaluated for their electrochemical characteristics.

Each battery was charged at 3 mA at an ambient temperature of 20 °C for 15 hours, and after an interval of 1 hour, it was discharged at 6 mA down to a cut-off voltage of 1 V. This charge/discharge cycle was repeated 5 times. The average discharge capacity (C_{6mA}) at the 5th cycle was 28 mAh, i.e., the positive electrode utilization rate (U_{6mA-R}) was 93%.

The increase (Δh₅ₜₕ) in battery height after 5 charge/discharge cycles was about 50 µm, compared to the height immediately after the battery production.

The internal impedance (I₅ₜₕ) after 5 charge/discharge cycles was about 1 Ω at 1 kHz.

Then, each of the batteries A was charged at 3 mA at an ambient temperature of 20 °C for 15 hours, and after an interval of 1 hour, it was discharged at 30 mA down to a cut-off voltage of 1 V. At this time, the average discharge capacity (C_{30mA}) was 23 mAh.

Subsequently, each battery was charged at 30 mA at an ambient temperature of 20°C for 1.2 hours and discharged at 30 mA down to a cut-off voltage of 1 V. This charge/discharge cycle was repeated 300 times. The average discharge capacity (C_{20mA-300th}) at the 300th cycle was 20 mAh.

The battery height after 300 charge/discharge cycles remained almost unchanged from before the cycle life test.

The internal impedance (I₃₀₀ₜₕ) after 300 charge/discharge cycles was about 1.5 Ω at 1 kHz.

In this example, only one current collector plate was used. However, there is no limitation with respect to the number of current collector plates, and the use of a plurality of current collector plates does not impair the effects of the present invention.

### Comparative Example 1

Coin-shaped nickel metal-hydride storage batteries B were produced in the same manner as in Example 1, except that the current collector plates used in Example 1 were not used. The height of the batteries B was about 1.9 mm.

The batteries B were evaluated for their electrochemical characteristics in the same manner as in Example 1.

The average discharge capacity (C_{6mA}) of the batteries B at the 5th cycle upon 6 mA discharge was 21 mAh, i.e., the positive electrode utilization rate (U_{6mA-R}) was 70%.

The increase (Δh₅ₜₕ) in battery height after 5 charge/discharge cycles was about 150 *µ*m, compared to the height immediately after the battery production.

The internal impedance (I₅ₜₕ) after 5 charge/discharge cycles was about 2 Ω at 1 kHz.

Then, each of the batteries B was charged at 3 mA at an ambient temperature of 20°C for 15 hours, and after an interval of 1 hour, it was discharged at 30 mA down to a cut-off voltage of 1 V. At this time, the average discharge capacity (C_{30mA}) was 13 mAh.

The above results indicate that the discharge capacity, high-rate discharge characteristics and internal impedance of the batteries A are far superior to those of the batteries B.

Thereafter, each battery was charged at 30 mA at an ambient temperature of 20°C for 1.2 hours and discharged at 30 mA down to a cut-off voltage of 1 V. This charge/discharge cycle was repeated 300 times. As a result, the average discharge capacity (C_{20mA-300th}) at the 300th cycle was 5 mAh.

After 300 charge/discharge cycles, the battery height increased by about 200 *µ*m, in comparison with before the cycle life test.

The internal impedance (I₃₀₀ₜₕ) after 300 charge/discharge cycles was about 5 Ω at 1 kHz.

The above results show that the cycle life characteristics of the batteries A are far superior to those of the batteries B.

### Example 2

Coin-shaped nickel metal-hydride storage batteries C-1 and C-2 were produced in the same manner as in Example 1, except that the ratio (D_{R}) of the length of the burr tip ends buried in the positive electrode to the apparent thickness of the current collector plate including burrs was varied by varying the pressure applied to the battery upon sealing. They were evaluated for their average discharge capacity (C_{6mA}) upon 6 mA discharge, average discharge capacity (C_{30mA}) upon 30 mA discharge, and internal impedance (I₅ₜₕ) after 5 charge/discharge cycles. The results are shown in Table 1.

**Table 1**

| Battery | D_{R}(%) | I₅ₜₕ(Ω) | C_{6mA}(mAh) | C_{30mA}(mAh) |
|---|---|---|---|---|
| C-1 | 0 | 2 | 25 | 15 |
| C-2 | 10 | 1 | 28 | 23 |
| A | 20 | 1 | 28 | 23 |

Table 1 indicates that good results can be obtained when the ratio of the length of the burr tip ends buried in the positive electrode to the apparent thickness of the current collector plate including burrs is 10% or more.

### Example 3

Coin-shaped nickel metal-hydride storage batteries D-1, D-2, and D-3 were produced in the same manner as in Example 1, except that the distance (D_{P-C}) between the inner bottom face of the case and the positive electrode was varied. In this example, in order to vary the distance between the inner bottom face of the case and the positive electrode, the dimensions of burrs formed on a 30µm thick nickel plate were varied in producing current collector plates. The dimensions of burrs were controlled by varying the dimensions of needle-like, quadrangular-pyramid-shaped protrusions of upper and lower rolls. The batteries D-1 to D-3 were evaluated for their average discharge capacity (C_{6mA}) upon 6 mA discharge, average discharge capacity (C_{30mA}) upon 30 mA discharge, internal impedance (I₅ₜₕ) after 5 charge/discharge cycles, and the increase in battery height (Δh₅ₜₕ), in the same manner as in Example 1. The results are shown in Table 2.

**Table 2**

| Battery | D_{P-C}(*µ*m) | I₅ₜₕ(Ω) | C_{6mA} (mAh) | C_{30mA}(mAh) | Δh₅ₜₕ |
|---|---|---|---|---|---|
| D-1 | 50 | 2 | 22 | 14 | 120 |
| D-2 | 100 | 1.2 | 26 | 19 | 80 |
| D-3 | 150 | 1 | 26 | 21 | 60 |
| A | 200 | 1 | 28 | 23 | 50 |

As shown in Table 2, when the distance between the inner bottom face of the case and the positive electrode is less than 100 µm, the discharge capacity tended to decrease markedly, and battery expansion, i.e., the increase in battery height, tended to increase. These results show that the distance between the inner bottom face of the case and the positive electrode is desirably 100 *µ*m or more in order to produce full effects of the present invention.

To make the distance between the inner bottom face of the case and the positive electrode 100 µm or more, it is necessary to use a current collector plate whose apparent thickness including burrs is 100 µm or more. However, if the apparent thickness of the current collector plate is too thick, the space inside the battery is wasted, so that the battery capacity decreases, resulting in a reduction in energy density. From the viewpoint of energy density, setting the apparent thickness of the current collector plate to 1/3 or less of the thickness of the adjacent electrode (the positive electrode in this example) was preferable.

### Example 4

Coin-shaped nickel metal-hydride storage batteries E-1 and E-2 were produced in the same manner as in Example 1, except that a stainless steel plate or a nickel-plated steel plate was used as the material of the current collector plate in place of the nickel plate. They were evaluated for their average discharge capacity (C_{6mA}) upon 6 mA discharge, average discharge capacity (C_{30mA}) upon 30 mA discharge, and internal impedance (I₅ₜₕ) after 5 charge/discharge cycles. The results are shown in Table 3.

**Table 3**

| Battery | Current collector plate | D_{R} (%) | I₅ₜₕ(Ω) | C_{6mA} (mAh) | C_{30mA} (mAh) |
|---|---|---|---|---|---|
| E-1 | Stainless steel | 10 | 1 | 28 | 23 |
| E-2 | Nickel-plated steel | 10 | 1 | 28 | 23 |
| A | Nickel | 10 | 1 | 28 | 23 |

The results of Table 3 indicate that the use of a current collector plate made of any of those materials produces the effects of improving the current-collecting characteristics between the case and the electrode and of facilitating the gas transfer, thereby resulting in a battery having excellent characteristics.

### Example 5

Coin-shaped nickel metal-hydride storage batteries F-1, F-2, F-3 and F-4 were produced in the same manner as in Example 1, except that the apparent thickness of the current collector plates was varied. In this example, in order to vary the apparent thickness of the current collector plates, the dimensions of burrs formed on a 30 µm thick nickel plate were varied in producing current collector plates. The dimensions of burrs were controlled by varying the dimensions of needle-like, quadrangular-pyramid-shaped protrusions of upper and lower rolls.

Also, coin-shaped nickel metal-hydride storage batteries F-5 were produced in the same manner as in Example 1, except for the use of a current collector plate produced by punching a nickel plate from only one side. The shapes of the burrs and the pores of the current collector plate of the batteries F-5 were made the same as those of Example 1.

Further, coin-shaped nickel metal-hydride storage batteries F-6 were produced in the same manner as in Example 1, except for the use of a current collector plate produced by punching a corrugated nickel plate (the difference in height between the ridges and grooves is 200 µm) from both sides. The shapes of the burrs and the pores of the current collector plate of the batteries F-6 were made the same as those of Example 1.

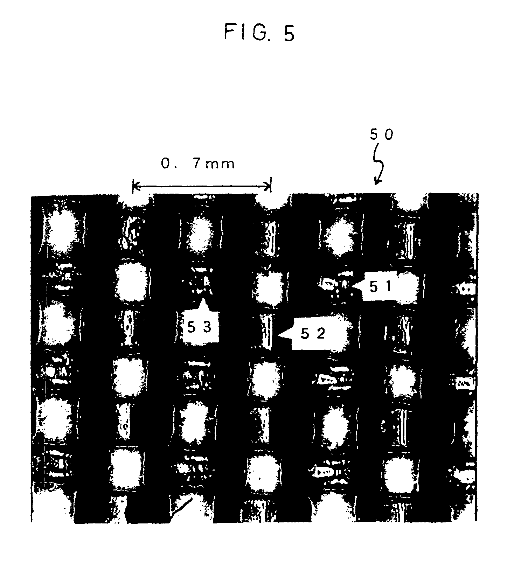

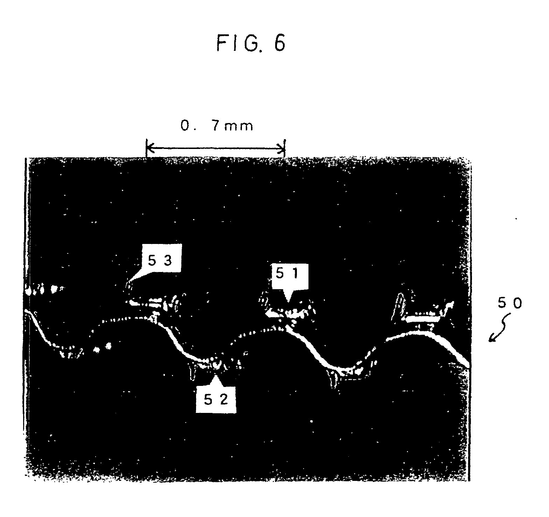

Fig. 5 shows an enlarged photograph of the top face of a current collector plate 50 used in the battery F-6. Also, Fig. 6 shows an enlarged photograph of a section of the current collector plate 50.

In Fig. 5, burrs 53 are formed around a pore A 51, which is made by upward punching with respect to the paper sheet, and a pore B 52, which is made by downward punching with respect to the paper sheet, as shown in Fig. 6. The interval between the pores A 51 and the interval between the pores B 52 are both about 0.7 mm.

Also, coin-shaped nickel metal-hydride storage batteries F-7 were produced in the same manner as in Example 1, except for the use of a current collector plate made of foam nickel (thickness: 250 µm; porosity: 98% by volume).

Further, coin-shaped nickel metal-hydride storage batteries F-8 were produced in the same manner as in Example 1, except for the use of a current collector plate comprising nickel expanded metal (apparent thickness: 250 µm).

The batteries F-1 to F-8 were evaluated for their average discharge capacity (C_{6mA}) upon 6 mA discharge and average discharge capacity (C_{30mA}) upon 30 mA discharge, in the same manner as in Example 1. The results are shown in Table 4.

**Table 4**

| Battery | Apparent thickness (µm) | Current collector plate | Corrugation | Punching direction | C_{6mA}(mAh) | C_{30mA}(mAh) |
|---|---|---|---|---|---|---|
| F-1 | 50 | Punched Both plate | No | sides | 26 | 20 |
| F-2 | 100 | Punched plate | No | Both sides | 27 | 22 |
| F-3 | 150 | Punched plate | No | Both sides | 27 | 22 |
| F-4 | 200 | Punched plate | No | Both sides | 28 | 23 |
| F-5 | 250 | Punched plate | No | One side | 28 | 21 |
| F-6 | 250 | Punched plate | Yes | Both sides | 30 | 25 |
| F-7 | 250 | Foam nickel | No | - | 27 | 22 |
| F-8 | 250 | Expanded metal | No | - | 26 | 20 |
| A | 250 | Punched plate | No | Both sides | 28 | 23 |

As shown in Table 4, the batteries F-1, in which the apparent thickness of the current collector plate is less than twice the material thickness (30 µm) of the nickel plate, had slightly decreased capacities. This indicates that the apparent thickness of the current collector plate is preferably equal to or more than twice the material thickness of the metal sheet before the working. Also, the batteries F-6, in which the nickel plate is corrugated, produced particularly good results. The batteries F-5, which include the current collector plate produced by punching the nickel plate from only one side, also produced good results. Further, the batteries F-7 and F-8, which include the current collector plates of foam nickel and expanded metal, also produced good results.

### Example 6

Coin-shaped nickel metal-hydride storage batteries G-1 and G-2 were produced in the same manner as in Example 1, except that the shape of pores made in a nickel plate was varied. In this example, current collector plates as illustrated in Figs. 3 and 4 were produced by varying the shape of the pores, using rolls whose surfaces had needle-like, triangular-pyramid-shaped or cone-shaped protrusions, instead of the rolls whose surfaces had needle-like, quadrangular-pyramid-shaped protrusions. In both of the current collector plates, the center-to-center distance between the pores closest to each other was 0.7 mm, and the area of one pore was about 0.04 mm².

The batteries G-1 and G-2 were evaluated for their average discharge capacity (C_{6mA}) upon 6 mA discharge and average discharge capacity (C_{30mA}) upon 30 mA discharge, in the same manner as in Example 1. The results are shown in Table 5.

**Table 5**

| Battery | Pore shape | Punching direction | C_{6mA}(mAh) | C_{30mA}(mAh) |
|---|---|---|---|---|
| G-1 | Circular | Both sides | 28 | 23 |
| G-2 | Triangular | Both sides | 27 | 22 |
| A | Rectangular | Both sides | 28 | 23 |

All the batteries produced good results and exerted the effects of the present invention. The shape of the pores needs not to be the same, and good results will also be obtained even in the presence of pores having different shapes.

### Example 7

Coin-shaped alkaline storage batteries H-1 and H-2 were produced in the same manner as in Example 1, except for the use of a cadmium compound or a zinc compound as the negative electrode material. In the case of using a zinc compound as the negative electrode material, a negative electrode core material made of copper was used, and a polypropylene micro-porous film subjected to a hydrophilic treatment was used as the separator. The batteries H-1 and H-2 were evaluated for their positive electrode utilization rate (U_{6mA-R}) upon 6 mA discharge, positive electrode utilization rate (U_{30mA-R}) upon 30 mA discharge, and internal impedance (I₅ₜₕ) after 5 charge/discharge cycles, in the same manner as in Example 1. The results are shown in Table. 6.

**Table 6**

| Battery | Negative electrode material | I₅ₜₕ( Ω ) | U_{6mA-R} | U_{30mA-R} |
|---|---|---|---|---|
| H-1 | Cadmium | 1 | 93 | 79 |
| H-2 | Zinc | 1 | 93 | 75 |
| A | Hydrogen storage alloy | 1 | 93 | 77 |

All the batteries produced excellent results, and the effects of the present invention were also exerted when the alkaline storage battery was the nickel cadmium storage battery or the nickel zinc storage battery.

### Example 8

Next, an explanation is given of the case of interposing a current collector plate between the inner face of the sealing plate and the negative electrode.

### (i) Preparation of current collector plate

A current collector plate was produced in almost the same manner as in Example 1. Specifically, a 30 µm thick nickel sheet was passed between upper and lower rolls whose surfaces had needle-like, quadrangular-pyramid-shaped protrusions. The needle-like, quadrangular-pyramid-shaped protrusions alternately pierced the nickel sheet in opposite directions, thereby forming rectangular pores and burrs at the same time. The resultant nickel plate having a plurality of pores and burrs formed around the pores was cut into a round shape with a diameter of about 9 mm, to obtain a current collector plate as illustrated in Fig. 2. The apparent thickness of the resultant current collector plate including the burrs was about 250 *µ*m, and the center-to-center distance between the pores closest to each other was 0.7 mm, and the area of one pore was about 0.04 mm².

### (ii) Assembly of battery

The current collector plate was placed on the inner face (a round shape with a diameter of about 9 mm) of a sealing plate, and the sealing plate and the current collector plate were welded together. Subsequently, a negative electrode was mounted on the current collector plate, and a separator was mounted thereon. A gasket was then fitted to the circumference of the sealing plate. Thereafter, an electrolyte was injected into the sealing plate, and a positive electrode was mounted on the separator. Thereafter, a case having an opening and a bottom was mounted so as to cover the positive electrode, and the opening edge of the case was crimped onto the gasket fitted to the circumference of the sealing plate, to seal the case. As a result, a coin-shaped nickel metal-hydride storage battery J with a diameter of about 12.5 mm was completed. The height of the battery J was about 2. 0 mm.

### (v) Examination and evaluation of battery

### [Examination]

Six batteries J were produced. Of them, three batteries J were cut, and their sectional structures were observed. It was found that the apparent thickness of the current collector plates including burrs was about 150 µm. However, before the production of the batteries J, the apparent thickness of the current collector plates was about 250 µm. Upon the sealing of the batteries, the current collector plates were pressed by the sealing plate and the negative electrode, so that the tip ends of the burrs were deformed. The tip ends of the burrs of the current collector plates were buried in the negative electrode to a depth of about 30 µm. It was observed that there was a gap in which the core material, the hydrogen storage alloy and the like did not exist between the negative electrode and the sealing plate.

### [Evaluation]

The remaining three batteries J were evaluated for their electrochemical characteristics.

Each battery was charged at 3 mA at an ambient temperature of 20 °C for 15 hours, and after an interval of 1 hour, it was discharged at 6 mA down to a cut-off voltage of 1 V. This charge/discharge cycle was repeated 5 times. The average discharge capacity (C_{6mA}) at the 5th cycle was 27 mAh, i.e., the positive electrode utilization rate (U_{6mA-R}) was 90%.

The increase (Δh₅ₜₕ) in battery height after 5 charge/discharge cycles was about 50 µm, compared to the height immediately after the battery production.

The internal impedance (I₅ₜₕ) after 5 charge/discharge cycles was about 1 Ω at 1 kHz.

Then, each of the batteries J was charged at 3 mA at an ambient temperature of 20 °C for 15 hours, and after an interval of 1 hour, it was discharged at 30 mA down to a cut-off voltage of 1 V. At this time, the average discharge capacity (C_{30mA}) was 22 mAh.

In this example, only one current collector plate was used. However, there is no limitation with respect to the number of current collector plates, and the use of a plurality of current collector plates does not impair the effects of the present invention.

### Example 9

Coin-shaped nickel metal-hydride storage batteries K-1 and K-2 were produced in the same manner as in Example 8, except that the ratio (D_{R}) of the length of the burr tip ends buried in the negative electrode to the apparent thickness of the current collector plate including burrs was varied by varying the pressure applied to the battery upon sealing. They were evaluated for their average discharge capacity (C_{6mA}) upon 6 mA discharge, average discharge capacity (C_{30mA}) upon 30 mA discharge, and internal impedance (I₅ₜₕ) after 5 charge/discharge cycles. The results are shown in Table 7.

**Table 7**

| Battery | D_{R}( %) | I₅ₜₕ( Ω ) | C_{6mA}(mAh) | C_{30mA} (MAh) |
|---|---|---|---|---|
| K-1 | 0 | 2 | 24 | 24 |
| K-2 | 10 | 1 | 27 | 22 |
| J | 20 | 1 | 27 | 22 |

Table 7 indicates that good results can be obtained when the ratio of the length of the burr tip ends buried in the negative electrode to the apparent thickness of the current collector plate including burrs is 10% or more.

### Example 10

Coin-shaped nickel metal-hydride storage batteries L-1, L-2, and L-3 were produced in the same manner as in Example 8, except that the distance (D_{N-C}) between the inner face of the sealing plate and the negative electrode was varied. In this example, in order to vary the distance between the inner face of the sealing plate and the negative electrode, the dimensions of burrs formed on a 30 µm thick nickel plate were varied in producing current collector plates. The dimensions of burrs were controlled by varying the dimensions of needle-like, quadrangular-pyramid-shaped protrusions of upper and lower rolls. The batteries L-1 to L-3 were evaluated for their average discharge capacity (C_{6mA}) upon 6 mA discharge, average discharge capacity (C_{30mA}) upon 30 mA discharge, internal impedance (I₅ₜₕ) after 5 charge/discharge cycles, and the increase in battery height (Δh₅ₜₕ), in the same manner as in Example 8. The results are shown in Table 8.

**Table 8**

| Battery | D_{N-C}(*µ*m) | I₅ₜₕ(Ω) | C_{6mA} (mAh) | C_{30mA}(mAh) | Δh₅ₜₕ |
|---|---|---|---|---|---|
| L-1 | 50 | 2 | 23 | 15 | 150 |
| L-2 | 70 | 1.5 | 25 | 18 | 130 |
| L-3 | 100 | 1 | 27 | 22 | 70 |
| J | 120 | 1 | 27 | 22 | 50 |

As shown in Table 8, when the distance between the inner face of the sealing plate and the negative electrode is less than 100 *µ*m, the discharge capacity tended to decrease markedly, and battery expansion, i.e., the increase in battery height, tended to increase. These results show that the distance between the inner face of the sealing plate and the negative electrode is desirably 100 *µ*m or more in order to produce full effects of the present invention.

To make the distance between the inner face of the sealing plate and the negative electrode 100 *µ*m or more, it is necessary to use a current collector plate whose apparent thickness including burrs is 100 *µ*m or more. However, if the apparent thickness of the current collector plate is too thick, the space inside the battery is wasted, so that the battery capacity decreases, resulting in a reduction in energy density. From the viewpoint of energy density, setting the apparent thickness of the current collector plate to 1/3 or less of the thickness of the adjacent electrode (the negative electrode in this example) was preferable.

### Example 11

Coin-shaped nickel metal-hydride storage batteries M-1 to M-4 were produced in the same manner as in Example 8, except that a stainless steel plate, a nickel-plated steel plate, a steel plate, or a copper plate was used in place of the nickel plate as the material of the current collector plate. They were evaluated for their average discharge capacity (C_{6mA}) upon 6 mA discharge, average discharge capacity ( C_{30mA}) upon 30 mA discharge, and internal impedance (I₅ₜₕ) after 5 charge/discharge cycles. The results are shown in Table 9.

**Table 9**

| Battery | Current collector plate | D_{R}(%) | I₅ₜₕ(Ω ) | C_{6mA}(mAh) | C_{30MA} (MAh) |
|---|---|---|---|---|---|
| M-1 | Stainless steel | 10 | 1 | 27 | 22 |
| M-2 | Nickel-plated steel | 10 | 1 | 27 | 22 |
| M-3 | Steel | 10 | 1 | 2 6 | 21 |
| M-4 | Copper | 10 | 1 | 27 | 22 |
| J | Nickel | 10 | 1 | 27 | 22 |

The results of Table 9 indicate that the use of a current collector plate made of any of those materials produces the effects of improving the current-collecting characteristics between the sealing plate and the electrode and of facilitating the gas transfer, thereby resulting in a battery having excellent characteristics.

### Example 12

Coin-shaped nickel metal-hydride storage batteries N-1, N-2, and N-3 were produced in the same manner as in Example 8, except that the apparent thickness of the current collector plates was varied. In this example, in order to vary the apparent thickness of the current collector plates, the dimensions of burrs formed on a 30 µm thick nickel plate were varied in producing current collector plates. The dimensions of burrs were controlled by varying the dimensions of needle-like, quadrangular-pyramid-shaped protrusions of upper and lower rolls.

Also, coin-shaped nickel metal-hydride storage batteries N-4 were produced in the same manner as in Example 8, except for the use of a current collector plate produced by punching a nickel plate from only one side. The shapes of the burrs and the pores of the current collector plate of the batteries N-4 were made the same as those of Example 8.

Further, coin-shaped nickel metal-hydride storage batteries N-5 were produced in the same manner as in Example 8, except for the use of a current collector plate produced by punching a corrugated nickel plate (the difference in height between the ridges and grooves is 100 µm) from both sides. The shapes of the burrs and the pores of the current collector plate of the batteries N-5 were made the same as those of Example 8.

Also, coin-shaped nickel batteries N-6 were produced in the same manner as in Example 8, except for the use of a current collector plate made of foam nickel (thickness: 150 *µ*m; porosity: 98% by volume).

Further, coin-shaped nickel metal-hydride storage batteries N-7 were produced in the same manner as in Example 8, except for the use of a current collector plate comprising nickel expanded metal (apparent thickness: 150 µm).

The batteries N-1 to N-7 were evaluated for their average discharge capacity (C_{6mA}) upon 6 mA discharge and average discharge capacity (C_{30mA}) upon 30 mA discharge, in the same manner as in Example 8. The results are shown in Table 10.

**Table 10**

| Battery | Apparent thickness (µm) | Current collector plate | Corrugation | Punching direction | C_{6mA}(mAh) | C_{30mA}(mAh) |
|---|---|---|---|---|---|---|
| N-1 | 50 | Punched plate | No | Both sides | 25 | 19 |
| N-2 | 70 | Punched plate | No | Both sides | 26 | 21 |
| N-3 | 100 | Punched | No | Both sides | 26 | 21 |
| N-4 | 150 | Punched plate | No | One side | 27 | 20 |
| N-5 | 150 | Punched plate | Yes | Both sides | 29 | 24 |
| N-6 | 150 | Foam nickel | No | - | 26 | 21 |
| N-7 | 150 | Expanded metal | No | - | 25 | 19 |
| J | 150 | Punched plate | No | Both sides | 27 | 22 |

As shown in Table 10, the batteries N-1, in which the apparent thickness of the current collector plate is less than twice the material thickness (30 µm) of the nickel plate, had slightly decreased capacities. This indicates that the apparent thickness of the current collector plate is preferably equal to or more than twice the material thickness of the metal sheet before the working. Also, the batteries N-5, in which the nickel plate is corrugated, produced particularly good results. The batteries N-4, which include the current collector plate produced by punching the nickel plate from only one side, also produced good results. Further, the batteries N-6 and N-7, which include the current collector plates of foam nickel and expanded metal, also produced good results.

### Example 13

Coin-shaped nickel metal-hydride storage batteries O-1 and O-2 were produced in the same manner as in Example 8, except that the shape of pores made in a nickel plate was varied. In this example, current collector plates as illustrated in Figs. 3 and 4 were produced by varying the shape of the pores, using rolls whose surfaces had needle-like, triangular-pyramid-shaped or cone-shaped protrusions, instead of the rolls whose surfaces had needle-like, quadrangular-pyramid-shaped protrusions. In both of the current collector plates, the center-to-center distance between the pores closest to each other was 0.7 mm, and the area of one pore was about 0.04 mm².

The batteries O-1 and O-2 were evaluated for their average discharge capacity (C_{6mA}) upon 6 mA discharge and average discharge capacity (C_{30mA}) upon 30 mA discharge, in the same manner as in Example 8. The results are shown in Table 11.

**Table 11**

| Battery | Pore shape | Punching direction | C_{6mA}(mAh) | C_{30mA}(mAh) |
|---|---|---|---|---|
| 0-1 | Circular | Both sides | 27 | 22 |
| 0-2 | Triangular | Both sides | 26 | 21 |
| J | Rectangular | Both sides | 27 | 22 |

All the batteries produced good results and exerted the effects of the present invention. The shape of the pores needs not to be the same, and good results will also be obtained even in the presence of pores having different shapes.

### Example 14

Coin-shaped alkaline storage batteries P-1 and P-2 were produced in the same manner as in Example 8, except for the use of a cadmium compound or a zinc compound as the negative electrode material. In the case of using a zinc compound as the negative electrode material, a negative electrode core material made of copper was used, and a polypropylene micro-porous film subjected to a hydrophilic treatment was used as the separator. The batteries P-1 and P-2 were evaluated for their positive electrode utilization rate (U_{6mA-R}) upon 6 mA discharge, positive electrode utilization rate (U_{30mA-R}) upon 30 mA discharge, and internal impedance (I₅ₜₕ) after 5 charge/discharge cycles, in the same manner as in Example 8. The results are shown in Table 12.

**Table 12**

| Battery | Negative electrode material | I₅ₜₕ(Ω) | U_{6mA-R} | U_{30mA-R} |
|---|---|---|---|---|
| P-1 | Cadmium | 1 | 90 | 75 |
| P-2 | Zinc | 1 | 90 | 71 |
| J | Hydrogen storage alloy | 1 | 90 | 73 |

All the batteries produced excellent results, and the effects of the present invention were also produced when the alkaline storage battery was the nickel cadmium storage battery or the nickel zinc storage battery.

### Example 15

Batteries Q were produced in the same manner as in Example 1, except that the positions of the positive electrode and the negative electrode were reversed and a current collector plate was welded to the inner face of the sealing plate. The current collector plate used in this example was the same as that in Example 1.

The current collector plate was placed on the inner face (a round shape with a diameter of about 9 mm) of a sealing plate, and the sealing plate and the current collector plate were welded together. Subsequently, a positive electrode was mounted on the current collector plate, and a separator was mounted thereon. A gasket was then fitted to the circumference of the sealing plate. Thereafter, an electrolyte was injected into the sealing plate, and a negative electrode was mounted on the separator. Thereafter, a case having an opening and a bottom was mounted so as to cover the negative electrode, and the opening edge of the case was crimped onto the gasket fitted to the circumference of the sealing plate, to seal the case. As a result, a coin-shaped nickel metal-hydride storage battery Q with a diameter of about 12.5 mm was completed. The height of the battery Q was about 2.1 mm.

The batteries Q were evaluated in the same manner as the batteries A. As a result, it was found that the internal impedance was 1 Ω, the positive electrode utilization rate at a discharge current of 6 mA was 93%, and the discharge capacity at a discharge current of 30 mA was 23 mAh. These results show that the effects of the present invention are exerted without depending on the arrangement of the positive electrode and the negative electrode.

### Example 16

Batteries R were produced in the same manner as in as in Example 1, except that a current collector plate was also interposed between the inner face of the sealing plate and the negative electrode in the same manner as in Example 8. In this example, a current collector plate that was the same as that of Example 8 was placed on the inner face (a round shape with a diameter of about 9 mm) of the sealing plate, and the sealing plate and the current collector plate were welded together. Subsequently, a negative electrode was mounted on the current collector plate, and a separator was mounted thereon. A gasket was then fitted to the circumference of the sealing plate. Thereafter, an electrolyte was injected into the sealing plate, and a positive electrode was mounted on the separator. Thereafter, a case having an opening and a bottom, whose inner face (a round shape with a diameter of about 12 mm) had been welded to another current collector plate, was mounted so as to cover the positive electrode, and the opening edge of the case was crimped onto the gasket fitted to the circumference of the sealing plate, to seal the case. As a result, a coin-shaped nickel metal-hydride storage battery R with a diameter of about 12.5 mm was completed. The height of the battery R was about 2. 25 mm.

The batteries R were evaluated in the same manner as the batteries A. As a result, it was found that the internal impedance was about 0.9 Ω, the positive electrode utilization rate at a discharge current of 6 mA was 95%, and the discharge capacity at a discharge current of 30 mA was 25 mAh. These results show that the provision of a current collector plate between the positive electrode and the inner bottom face of the battery case and between the negative electrode and the inner face of the sealing plate results in a battery having characteristics superior to those of the batteries of Example 1 and Example 8.

### Example 17

Batteries S were produced in the same manner as in Example 15, except that a current collector plate was also interposed between the negative electrode and the inner bottom face of the battery case. The current collector plate interposed between the negative electrode and the inner bottom face of the battery case was the same as that used in Example 8.

First, a current collector plate which was the same as that of Example 1 was placed on the inner face (a round shape with a diameter of about 9 mm) of a sealing plate, and the sealing plate and the current collector plate were welded together. Subsequently, a positive electrode was mounted on the current collector plate, and a separator was mounted thereon. A gasket was then fitted to the circumference of the sealing plate. Thereafter, an electrolyte was injected into the sealing plate, and a negative electrode was mounted on the separator. Thereafter, a case having an opening and a bottom, whose inner face (a round shape with a diameter of about 12 mm) had been welded to another current collector plate, was mounted so as to cover the negative electrode, and the opening edge of the case was crimped onto the gasket fitted to the circumference of the sealing plate, to seal the case. As a result, a coin-shaped nickel metal-hydride storage battery S with a diameter of about 12.5 mm was completed. The height of the battery was about 2. 25 mm.

The batteries S were evaluated in the same manner as the batteries A. As a result, it was found that the internal impedance was 0.9 Ω, the positive electrode utilization rate at a discharge current of 6 mA was 95%, and the discharge capacity at a discharge current of 30 mA was 25 mAh.

### Example 18

Batteries T were produced in the same manner as in Example 1, except that two parallel-connected positive electrodes and two parallel-connected negative electrodes were used and that the depth of the case and the sealing plate was changed. In this example, a first negative electrode was mounted on the inner face of a+ sealing plate, and a first separator was mounted thereon. Subsequently, a first positive electrode was mounted on the first separator, and a second separator was mounted thereon. A second negative electrode was then mounted onto the second separator, and a third separator was mounted thereon. A gasket was then fitted to the circumference of the sealing plate. Thereafter, an electrolyte was injected into the sealing plate, and a second positive electrode was mounted on the third separator. Thereafter, a case having an opening and a bottom, whose inner face (a round shape with a diameter of about 12 mm) had been welded to a current collector plate, was mounted so as to cover the second positive electrode, and the opening edge of the case was crimped onto the gasket fitted to the circumference of the sealing plate, to seal the case. As a result, a coin-shaped nickel metal-hydride storage battery T with a diameter of about 12.5 mm was completed. The height of the battery T was about 3.7 mm. The theoretical capacity of the positive electrode was 60 mAh, which was the sum of those of the first positive electrode and the second positive electrode.

The batteries T were evaluated in the same manner as the batteries A. As a result, it was found that the internal impedance was 0.6 Ω, the positive electrode utilization rate at a discharge current of 6 mA was 98%, and the discharge capacity at a discharge current of 30 mA was 54 mAh.

Further, batteries U were produced in the same manner as in Example 18, except that a current collector plate was not welded to the inner bottom face of the case having an opening and a bottom, and they were evaluated in the same manner. As a result, it was found that the internal impedance of the batteries U was about 1.2 Ω, the positive electrode utilization rate at a discharge current of 6 mA was 75%, and the discharge capacity at a discharge current of 30 mA was 30 mAh.

### Industrial Applicability

As described above, the present invention can suppress dimensional changes caused by the increase in battery internal pressure at the final stage of charging and upon overcharge, and the degradation in electrochemical characteristics due to uneven electrolyte distribution. Also, the present invention can reduce the contact resistance between the electrode and the case or the sealing plate. Further, the present invention can provide an alkaline storage battery having excellent electrochemical characteristics and low internal resistance at low manufacturing costs.

## Claims

1. An alkaline storage battery comprising:
[a] a shallow case having an opening and a bottom;
[b] a sealing plate covering the opening of said case;
[c] a first electrode adjacent to an inner face of the bottom of said case;
[d] a second electrode adjacent to an inner face of said sealing plate;
[e] a separator interposed between said first electrode and said second electrode;
[f] an alkaline electrolyte; and
[g] at least one current collector plate selected from the group consisting of (g1) a conductive current collector plate joined to the inner face of the bottom of said case and forming a gas transfer path distributed two-dimensionally between the inner face of the bottom of said case and said first electrode and (g2) a conductive current collector plate joined to the inner face of said sealing plate and forming a gas transfer path distributed two-dimensionally between the inner face of said sealing plate and said second electrode.

2. The alkaline storage battery in accordance with claim 1, wherein said gas transfer path is distributed in an area of 50 to 100 % of the whole inner face of the bottom of said case or the whole inner face of said sealing plate.

3. The alkaline storage battery in accordance with claim 1, wherein said first electrode is 100 *µ*m or more distant from the inner face of the bottom of said case, or said second electrode is 100 *µ*m or more distant from the inner face of said sealing plate.

4. The alkaline storage battery in accordance with claim 1, wherein one of said first electrode and said second electrode is a negative electrode having a core material comprising punched metal.

5. The alkaline storage battery in accordance with claim 1, wherein one of said first electrode and said second electrode is a negative electrode comprising a hydrogen storage alloy or zinc.

6. The alkaline storage battery in accordance with claim 1, wherein said current collector plate [g] comprises a conductive porous material having pores that communicate with one another.

7. The alkaline storage battery in accordance with claim 1, wherein said current collector plate [g] comprises a conductive sheet having a plurality of protrusions.

8. The alkaline storage battery in accordance with claim 7, wherein said current collector plate [g] including said protrusions has an apparent thickness of 100 *µ*m or more.

9. The alkaline storage battery in accordance with claim 7, wherein said current collector plate [g] including said protrusions has an apparent thickness that is 1/3 or less of the thickness of said first electrode or said second electrode adjacent to said current collector plate.

10. The alkaline storage battery in accordance with claim 7, wherein said plurality of protrusions have tip ends that are buried in said first electrode or said second electrode.

11. The alkaline storage battery in accordance with claim 10, wherein said tip ends buried in said first electrode or said second electrode have a length that is 10% or more of the apparent thickness of said current collector plate [g] including said protrusions.

12. The alkaline storage battery in accordance with claim 7, wherein said conductive sheet having the plurality of protrusions comprises a metal sheet deformed by punching from one side or both sides and has a plurality of pores and burrs formed around said pores, and said conductive sheet including said burrs has an apparent thickness that is equal to or more than twice the material thickness of said metal sheet.

13. The alkaline storage battery in accordance with claim 12, wherein pores closest to each other are formed by punching from opposite sides, and burrs formed around said pores protrude in mutually opposing directions.

14. The alkaline storage battery in accordance with claim 12, wherein pores closest to each other have a center-to-center distance of 0.3 mm or more and 5 mm or less.

15. The alkaline storage battery in accordance with claim 12, wherein said metal sheet before being deformed by punching has projections and depressions.

16. An alkaline storage battery comprising:
[a] a shallow case having an opening and a bottom;
[b] a sealing plate covering the opening of said case;
[c] a first electrode adjacent to an inner face of the bottom of said case;
[d] a second electrode adjacent to an inner face of said sealing plate;
[e] a separator interposed between said first electrode and said second electrode;
[f] an alkaline electrolyte; and
(g1) at least one spacer joined to the inner face of the bottom of said case and having at least one protrusion that forms a gas transfer path distributed two-dimensionally between the inner face of the bottom of said case and said first electrode, and/or (g2) at least one spacer joined to the inner face of said sealing plate and having at least one protrusion that forms a gas transfer path distributed two-dimensionally between the inner face of said sealing plate and said second electrode.

17. An alkaline storage battery comprising:
[a] a shallow case having an opening and a bottom;
[b] a sealing plate covering the opening of said case;
[c] a first electrode adjacent to an inner face of the bottom of said case;
[d] a second electrode adjacent to an inner face of said sealing plate;
[e] a separator interposed between said first electrode and said second electrode;
[f] an alkaline electrolyte; and
[g] at least one current collector plate selected from the group consisting of (g1) a conductive current collector plate joined to the inner face of the bottom of said case and forming a gap between the inner face of the bottom of said case and said first electrode and (g2) a conductive current collector plate joined to the inner face of said sealing plate and forming a gap between the inner face of said sealing plate and said second electrode.
